# EUROPEAN PATENT SPECIFICATION

(11) **EP 1 760 944 B1**
(45) Date of publication and mention of the grant of the patent: **04.06.2008**
(21) Application number: 05108131.3
(22) Date of filing: 06.09.2005
(51) Int. Cl.: H04L 12/28, H04L 29/08, H04M 1/725, H04B 10/10

(54) **Controlling visibility of a wireless device in discoverable mode**
Steuerung der Sichtbarkeit eines drahtlosen Kommunikationsgerätes im auffindbaren Modus
Contrôle de la visibilité d'un dispositif sans fil à mode détectable

(43) Date of publication of application: 07.03.2007
(73) Proprietor: Research In Motion Limited, Waterloo, Ontario N2L 3W8 (CA)
(72) Inventor: Brown, Michael K, Kitchener, Ontarion N2M 2Z2 (CA); Kirkup, Michael, Kitchener, Ontario N2J 4Y3 (CA); Brown, Michael S, Kichener, Ontario (CA)
(74) Representative: Rickard, David John

(56) References cited:
- EP-A- 1 416 703
- WO-A-01/39577
- WO-A-03/021978
- US-A- 5 440 559
- US-A1- 2002 077 139
- US-A1- 2002 188 863
- US-A1- 2005 020 207
- US-B1- 6 748 195
- GRYAZIN E A: "Service Discovery in Bluetooth" HELSINKI UNIVERSITY OF TECHNOLOGY, 6 October 2000 (2000-10-06), XP002311799

## Description

Bluetooth® wireless technology provides an easy way for a wide range of Bluetooth® devices (BT devices) to communicate with each other and connect to the Internet without the need for wires, cables and connectors.

The Bluetooth® core specifications v1.1, published February 22, 2001 by the Bluetooth® special interest group (SIG) and the Bluetooth® core specifications v1.2, published November 5, 2003, comprise provisions for an *Inquiry* procedure where a BT device transmits inquiry messages and listens for responses in order to discover the other BT devices that are within range.

The Bluetooth® v1.1 and v1.2 specifications include provisions for three discoverability modes: *Non-Discoverable Mode, Limited Discoverable Mode* and *General Discoverable Mode.* According to these specifications, a device is in one, and only one, discoverability mode at a time.

When a BT device is in *Non-Discoverable Mode* it does not respond to inquiry messages. A BT device is said to be discoverable when it is in *Limited Discoverable Mode* or *General Discoverable Mode.* The Bluetooth® v1.1 and v1.2 specifications include provisions for a Limited Inquiry procedure and a General Inquiry procedure. Only devices in *Limited Discoverable Mode* are discovered by the *Limited Inquiry* procedure. A *General Inquiry* procedure will detect discoverable devices, regardless of the discoverable mode.

Even when a BT device is discoverable, it may be unable to respond to inquiry messages due to other baseband activity. A BT device that does not respond to inquiry messages due to being in *Non-Discoverable Mode* or due to other baseband activity is called a silent device. In *Limited Discoverable Mode,* a BT device is visible to all other BT devices that are within range, but only for limited periods of time. In *General Discoverable Mode,* a BT device is visible to all other BT devices that are within range, continuously or for no specific condition.

Even when not discoverable, a BT device is visible to other BT devices and users that are familiar with its Bluetooth® device address. The Bluetooth® device address is a unique 48-bit device identifier, where three bytes of the address are assigned to a specific manufacturer by the Institute of Electrical and Electronics Engineers (IEEE), and the other three bytes are freely allocated by the manufacturer.

There are a greater number of security concerns when a BT device is discoverable. A non-exhaustive list of examples for the security concerns includes eavesdropping on the data transferred during the communication of two BT devices, and the ability to fully impersonate other BT devices.

Similar concerns may arise with devices compatible with other wireless communication protocols, a non-exhaustive list of examples for which includes ZigBee^{™}, radio frequency identification (RFID), ultra wideband (UWB), IEEE 802.11, and various proprietary communication protocols.

US 2002/018863 describes a system for conducting a transaction with privacy on a wide area network. A personal access device (PAD) is carried by a subscriber into a store. The PAD receives an inquiry. In accordance with the subscriber's profile, the PAD can ignore the inquiry or can send a communication to its privacy service provider using the wireless technology in the store or other means.

US 5,440,559 is concerned with the transfer of information among electronic devices without requiring large amounts of battery power. A personal communication device (PCD) that includes a security list of acceptable identification codes is described. Another device periodically transmits a hailing message using its infrared transceiver, and the personal communication device periodically attempts to receive a hailing message using its infrared transceiver. The hailing message may include an identification code which uniquely identifies the device transmitting the hailing message. If the ID code is not in the internal security list of the personal communication device, the personal communication device will not respond to the hailing message. In one alternative, the PCD ignores hailing messages that match ID of the personal computer with which the PCD has recently had a communication session.

WO 03/021978 describes a virtual linking system used as an intermediary between a user device and multiple service devices. The virtual linking system filters appropriate service devices according to the user device's requested service. The intermediary always responds to service requests from the user device, even if there is no valid service device match.

WO 01/039577 describes a method for filtering incoming multimedia messages by a wireless terminal. A parameter classifying the content of the intended message is included in a first short message, or is attached to the intended message in a header. The receiving wireless terminal decides, on the basis of the parameter, whether or not to accept the message.

US 2002/0077139 describes a method for controlling low power radio frequency activity of terminals. A first wireless terminal sends a signal to a second wireless terminal. The second terminal receives the signal a number of times and compares the received transmission indications with predetermined indication values. When the comparison shows that a predetermined number of satisfactory indications have been received, the second terminal commences transmission.

US 6,748,195 describes a wireless device that changes its operational behavior in accordance with a defined profile when a context parameter changes. For example, based on a profile associated with a location, the wireless device can change its operational behavior relative to sharing resources with other devices.

US 2005/0020207 describes a connection button on a wireless device such as headphones that a user may depress when the user wishes for the headphones to respond to inquiries from another device.

### GENERAL

A wireless device in a discoverable mode receives inquiries from inquiring devices that are searching for discoverable devices. Rather than answering each inquiry, the wireless device controls its visibility by determining whether to ignore or respond to an inquiry based, at least in part, on one or more properties of the inquiring device that are ascertainable from the inquiry. For example, the wireless device will respond to the inquiry if an identifier of the inquiring device is ascertainable from the inquiry, and the identifier is in a set of identifiers of one or more devices previously connected to the wireless device. The set of identifiers in this example is listed and not preset by the manufacturer of the wireless device. The wireless device may begin controlling its visibility in this manner once there is at least one identifier of a device in the set.

If Bluetooth® security procedures have been used in the connection between the wireless device and a device identified in the set, then the wireless device and the device identified in the set may be paired and therefore share a secret that is used as the basis of a trusted relationship therebetween.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a block diagram of an exemplary communications system, according to some embodiments;

Figure 2 is a flowchart of an exemplary method for controlling visibility of a wireless device, according to some embodiments;

Figure 3 is flowchart of an exemplary method for determining whether to ignore or respond to an inquiry, according to some embodiments; and

Figure 4 is an illustration of an exemplary communications system, according to some embodiments.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, weil-known methods, procedures, components and circuits have not been described in detail so as not to obscure the embodiments.

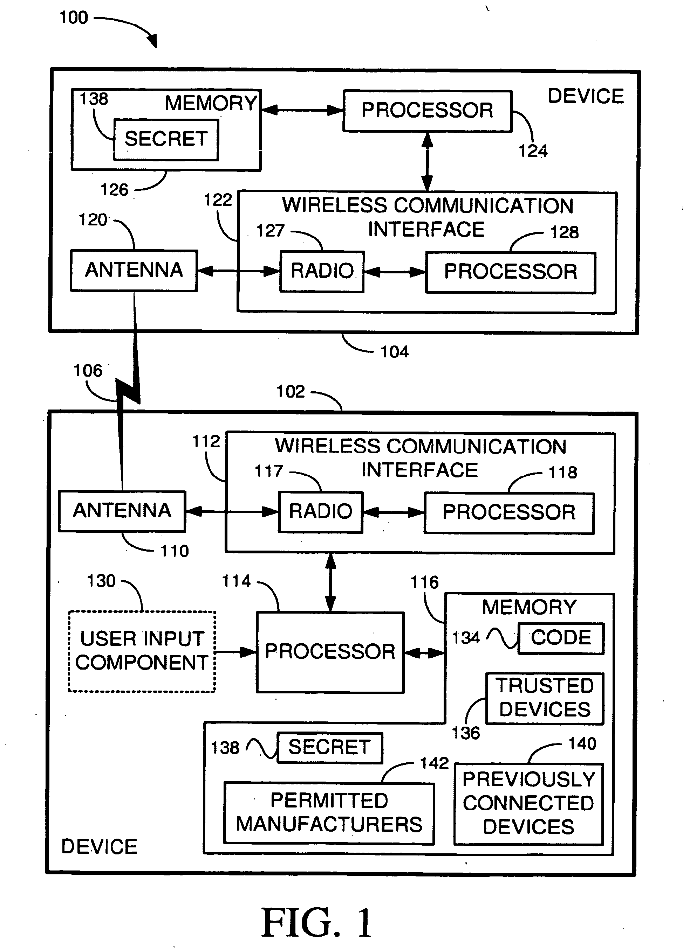

Figure 1 is a block diagram of an exemplary communications system 100, according to some embodiments. System 100 comprises a device 102 and a device 104 able to communicate over a wireless communication link 106.

A non-exhaustive list of examples for devices 102 and 104 includes any of the following:
a) wireless human interface devices, for example, keyboards, mice, remote controllers, digital pens and the like;
b) wireless audio devices, for example, headsets, speakers, microphones, cordless telephones, handsets, stereo headsets and the like;
c) wireless computerized devices, for example, notebook computers, laptop computers, desktop personal computers, personal digital assistants (PDAs), handheld computers, cellular telephones, MP3 players, printers, facsimile machines, and the like; and
d) wireless communication adapters, for example, universal serial bus (USB) adapters, personal computer memory card international association (PCMCIA) cards, compact flash (CF) cards, mini peripheral component interconnect (PCI) cards, access points, and the like.

Device 102 may support one or more discoverable modes. For example, if device 102 is a BT device, device 102 may support *Limited Discoverable Mode* and/or *General Discoverable Mode.*

Device 102 comprises an antenna 110, a wireless communication interface 112, a processor 114 coupled to wireless communication interface 112, and a memory 116 coupled to processor 114. Memory 116 may be fixed in or removable from device 102. Memory 116 may be embedded or partially embedded in processor 114. Processor 114 and memory 116 may be part of the same integrated circuit or in separate integrated circuits. Wireless communication interface 112 comprises a radio 117 coupled to antenna 110, and a processor 118 coupled to radio 117. Processor 118 may be able to cause device 102 to be in a discoverable mode. Wireless communication interface 112 and processor 114 may be part of the same integrated circuit or in separate integrated circuits.

Similarly, device 104 comprises an antenna 120, a wireless communication interface 122, a processor 124 coupled to wireless communication interface 122, and a memory 126 coupled to processor 124. Memory 126 may be fixed in or removable from device 104. Memory 126 may be embedded or partially embedded in processor 124. Processor 124 and memory 126 may be part of the same integrated circuit or in separate integrated circuits. Wireless communication interface 122 comprises a radio 127 coupled to antenna 120, and a processor 128 coupled to radio 127. Wireless communication interface 122 and processor 124 may be part of the same integrated circuit or in separate integrated circuits.

A non-exhaustive list of examples for antennae 110 and 120 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples of communication protocols with which communication interfaces 112 and 122 may be compatible includes Bluetooth®, ZigBee^{™}, radio frequency identification (RFID), ultra wideband (UWB), IEEE 802.11, and proprietary communication protocols.

A non-exhaustive list of examples for processors 114, 118, 124 and 128 includes a central processing unit (CPU), a digital signal processor (DSP), a reduced instruction set computer (RISC), a complex instruction set computer (CISC) and the like. Furthermore, processors 114, 118, 124 and 128 may be part of application specific integrated circuits (ASICs) or may be a part of application specific standard products (ASSPs).

A non-exhaustive list of examples for memories 116 and 126 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Device 102 may optionally comprise a user input component 130 coupled to processor 114. Input from user input component 130 may be interpreted by processor 114 as intended to result in device 102 being in a discoverable mode. Other and/or additional user input components are also possible. For example, processor 114 may interpret combinations of input as intended to result in device 102 being in a discoverable mode.

Devices 102 and 104 may comprise additional components which are not shown in Figure 1 and which, for clarity, are not described herein.

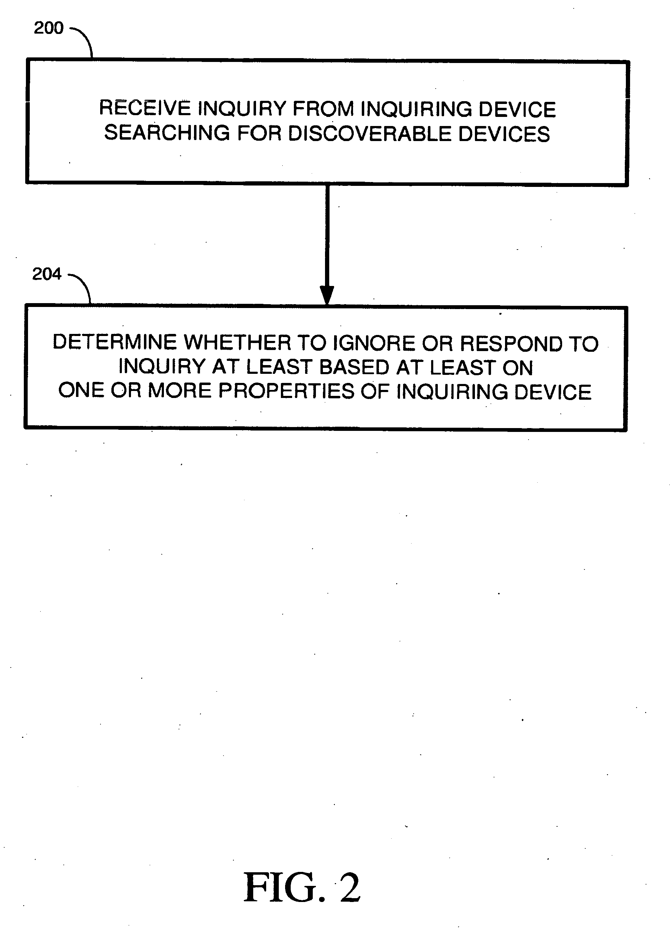

Figure 2 is a flowchart of an exemplary method for controlling visibility of a wireless device, according to some embodiments. Code 134 stored in memory 116 may implement the method of Figure 2 in device 102.

At 202, device 102 receives an inquiry from an inquiring device, for example, device 104, that is searching for discoverable devices ascertains that another device. For example, if devices 102 and 104 are BT devices, the inquiry may be an inquiry request according to the *General Inquiry* procedure or according to the *Limited Inquiry* procedure.

At 204, device 102 determines whether to ignore or respond to the inquiry based at least in part on one or more properties of the inquiring device. This controls the visibility of device 102, since device 102 is not detected by inquiring devices sending inquiries that are ignored by device 102. The one or more properties of the inquiring device are ascertainable by device 102 from the inquiry.

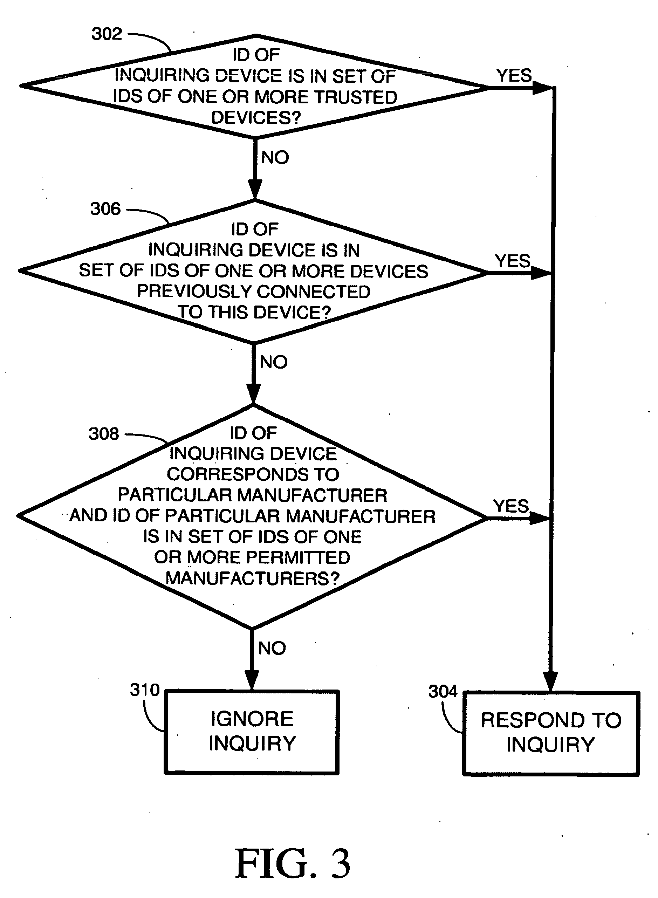

Figure 3 is a flowchart of an exemplary method for determining whether to ignore or respond to an inquiry, according to some embodiments. Code 134 stored in memory 116 may implement the method of Figure 3 in device 102.

Device 102 may have one or more criteria that are to be met by the one or more properties of the inquiring device. Criteria and/or properties other than those described with respect to Figure 3 are also contemplated.

Device 102 may check at 302 whether an identifier of the inquiring device is included in a set 136 of identifiers of one or more trusted devices. Device 102 may store set 136 in memory 116, as shown in Figure 1. What constitutes a trusted device may depend on the precise implementation. For example, device 102 and device 104 may share a secret 138 that is used as a basis for a trusted relationship therebetween. Secret 138 is stored in memory 116 and in memory 126. For example, the Bluetooth® v1.1 and v1.2 specifications provide various security procedures (pairing, authentication and encryption). An *Authentication* procedure is based on a challenge-response scheme. Successful calculation of the authentication response requires that two devices share a secret *Link Key.* This *Link Key* is created during a *Pairing* procedure. If at least one authentication has been performed, then encryption may be used. The set of one or more trusted devices may include devices with which device 102 is paired.

If the identifier of the inquiring device is included in set 136, then device 102 may respond to the inquiry at 304.

If not, then device 102 may check at 306 whether the identifier of the inquiring device is included in a set 140 of identifiers of one more devices previously connected to device 102. Device 102 may store set 140 in memory 116, as shown in Figure 1. Sets 136 and 140 may be stored in a combined manner without redundancies.

If the identifier of the inquiring device is included in set 140, then device 102 may respond to the inquiry at 304.

If not, then device 102 may check at 308 whether the identifier of the inquiring device corresponds to a particular manufacturer and an identifier of the particular manufacturer is included in a set 142 of one or more permitted manufacturers. Device 102 may store set 142 in memory 116, as shown in Figure 1. For example, set 142 may include only an identifier of the manufacturer of device 102. In another example, set 142 may include only identifiers of manufacturers with which the manufacturer of device 102 has established an agreement. In a further example, set 142 may include only identifiers of manufacturers that are known by the manufacturer of device 102 to manufacture devices that are compatible with device 102.

If the identifier of the particular manufacturer is included in set 142, then device 102 may respond to the inquiry at 304.

If not, then device 102 may ignore the request at 310.

An example for the identifier of the inquiring device is a media access control address of the inquiring device. Another example for the identifier of the inquiring device is a Bluetooth® device address.

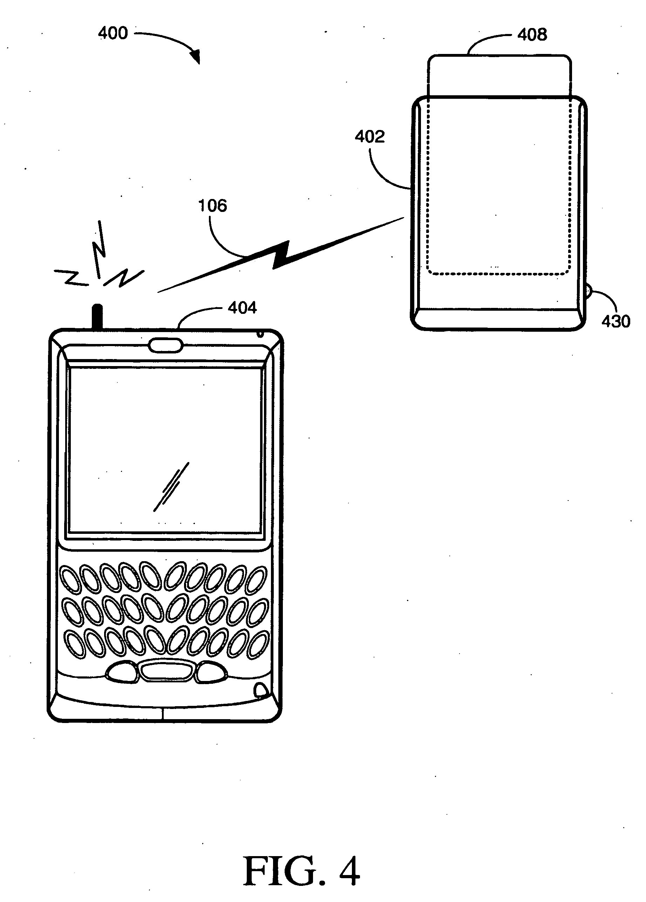

Figure 4 is an illustration of an exemplary communication system 400, according to some embodiments. System 400 is similar to system 100 of Figure 1, where device 102 is a wireless smart card reader 402, and device 104 is a mobile device 404. Mobile device 404 and smart card reader 402 are able to communicate over wireless communication link 106. In the example shown in Figure 4, user input component 130 is an electro-mechanical device 430, however, other and/or additional user input components are possible.

A smart card 408 is shown inserted into smart card reader 402. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 408 may use smart card reader 402 for identification, to unlock mobile device 404, and to digitally sign and/or decrypt messages sent by mobile device 404. Smart card 408 may also include a random number generator.

For example, mobile device 404 may be able to send and receive e-mail messages via an e-mail server (not shown). If, for example, the Secure Multipurpose Internet Mail Extensions (S/MIME) protocol is used, mail messages received at mobile device 404 are encrypted using a symmetric algorithm with a random session key generated by the sender of the e-mail message. The e-mail message also includes the session key, encrypted using the public key of the recipient. Upon receipt of an encrypted e-mail message, mobile device 404 may extract the encrypted session key and send it to smart card reader 402 via communication link 106. Smart card reader 402 may send the encrypted session key to smart card 408, and the decryption engine of smart card 408 may decrypt the encrypted session key using the recipient's private decryption key, which is stored in smart card 408. Smart card reader 402 may retrieve the decrypted session key from smart card 408 and forward it to mobile device 404 via communication link 106 so that mobile device 404 can decrypt the received e-mail message. The smart card 408 may prevent unauthorized use of the recipient's private decryption key by requiring that a password or personal identification number (PIN) be supplied before allowing the decryption operation to proceed.

Similarly, to add a digital signature to an e-mail message being sent by mobile device 404, mobile device 404 may send a hash of the contents of the e-mail message to smart card reader 402 over communication link 106. Smart card reader 402 may pass the hash to smart card 408, which may produce a digital signature from the hash and the sender's private signing key, which is stored in smart card 408. Smart card 408 may then pass the digital signature to smart card reader 402, which may forward it to mobile device 404 via communication link 106 so that mobile device 404 can transmit it along with the e-mail message to the e-mail server. Again, smart card 408 may prevent unauthorized use of the recipient's private signing key by requiring that a password or PIN be supplied before allowing the signing operation to proceed.

The unencrypted message key should be sent securely over communication link 106 from smart card reader 402 to mobile device 404 to prevent a third party from retrieving the message key from communication link 106. Similarly, the hash to be signed should be sent authentically over communication link 106 from smart card reader 402 to mobile device 404 to prevent a third party from modifying the hash and thereby causing smart card 408 to produce a signature using a hash different from the hash of the intended message. Therefore communication link 106 may need to be secured using cryptographic techniques.

To secure communication link 106, smart card reader 402 may need to generate various cryptographic keys. For example, if smart card reader 402 and mobile device 102 are BT devices, then a relatively short (up to 16-digits) key may be used for the *Pairing* procedure. An additional layer of security for communication link 106 may involve encryption with one or more additional keys. These additional keys may be generated from a shared secret between smart card reader 402 and mobile device 404, and one or more symmetric keys based on this shared secret may be generated using known Diffie-Hellman and simple password exponential key exchange (SPEKE) methods and variants thereof. Moreover, random session keys may be generated for each individual communication session over communication link 106.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method to control the visibility of a wireless device (102) in a discoverable mode, the method comprising:
receiving an inquiry from an inquiring device (104) that is searching for discoverable devices;
determining whether to ignore or respond to said inquiry based at least in part on one or more properties of said inquiring device (104) ascertainable from said inquiry;
**characterised in that** the method further comprises the step of
responding to said inquiry if an identifier of said inquiring device (104) is ascertainable from said inquiry and if said identifier is comprised in a set (140) of identifiers of one or more devices previously connected to said wireless device (102).

2. A wireless device (102) comprising:
a wireless communication interface (112) able to cause said wireless device (102) to be in a discoverable mode and through which said wireless device (102) is able to receive an inquiry from an inquiring device (104) that is searching for discoverable devices;
a processor (114) coupled to said wireless communication interface (112); and
a memory (116) coupled to said processor (114), **characterised in that** said memory (116) is arranged to store a set (140) of identifiers of one or more devices previously connected to said wireless device (102) and to store executable code means (134) which, when executed by said processor (114), is arranged to determine whether to ignore or respond to said inquiry based at least in part on one or more properties of said inquiring device (104) ascertainable from said inquiry, and is arranged to cause said wireless device (102) to respond to said inquiry via said wireless communication interface (112) if said set comprises an identifier of said inquiring device (104) ascertainable from said inquiry.

3. The wireless device (102) of claim 2, wherein said wireless device (102) is a smart card reader (402).

4. The wireless device (102) of claim 2 or claim 3, wherein said wireless communication interface (112) is compatible with Bluetooth® communication protocols and/or ultra wideband (UWB) communication protocols, and/or ZigBee^{™} communication protocols and/or radio frequency identification (RFID) communication protocols and/or one or more IEEE 802.11 communication protocols.

5. A communication system (100) comprising:
an inquiring device (104) able to search via a wireless communication interface for discoverable devices, said wireless communication interface compatible with at least one wireless communication protocol; and
a wireless device (102) according to any one of claims 2 to 4, wherein said wireless communication interface (112) is compatible at least with said wireless communication protocol.

6. The communication system (100) of claim 5, wherein said wireless communication protocol is a Bluetooth® communication protocol or an ultra wideband (UWB) communication protocol or a ZigBee^{™} communication protocol or a radio frequency identification (RFID) communication protocol or an IEEE 802.11 communication protocol.

7. A computer program product for controlling visibility of a wireless device (102) in a discoverable mode, the computer program product comprising a computer readable medium (116) embodying program code means (134) executable by a processor (114) of said wireless device (102) for implementing the method of claim 1.

## Patentansprüche

1. Verfahren zum Steuern der Sichtbarkeit eines drahtlosen Kommunikationsgeräts (102) in einem auffindbaren Modus, wobei das Verfahren Folgendes umfasst:
Empfangen einer Abfrage von einer abfragenden Vorrichtung (104), die nach auffindbaren Kommunikationsgeräten sucht;
Ermitteln, ob die Abfrage basierend mindestens teilweise auf einer oder mehreren aus der Abfrage feststellbaren Eigenschaften der abfragenden Vorrichtung (104) zu ignorieren oder darauf zu reagieren ist;
**dadurch gekennzeichnet, dass** das Verfahren des Weiteren den Schritt des Reagierens auf die Abfrage umfasst, wenn eine Identifizierung der abfragenden Vorrichtung (104) aus der Abfrage feststellbar ist und wenn die Identifizierung in einer Menge (140) von Identifizierungen einer oder mehrerer zuvor mit dem drahtlosen Kommunikationsgerät (102) verbundener Kommunikationsgeräte enthalten ist.

2. Drahtloses Kommunikationsgerät (102), das Folgendes umfasst:
eine drahtlose Kommunikationsschnittstelle (112), die bewirken kann, dass das drahtlose Kommunikationsgerät (102) in einem auffindbaren Modus ist, und durch die das drahtlose Kommunikationsgerät (102) von einer abfragenden Vorrichtung (104), die nach auffindbaren Kommunikationsgeräten sucht, eine Abfrage empfangen kann;
einen mit der drahtlosen Kommunikationsschnittstelle (112) verbundenen Prozessor (114); und
einen mit dem Prozessor (114) verbundenen Speicher (116), **dadurch gekennzeichnet, dass** der Speicher (116) angeordnet ist, um eine Menge (140) von Identifizierungen eines oder mehrerer mit dem drahtlosen Kommunikationsgerät (102) zuvor verbundener Kommunikationsgeräte zu speichern und ausführbare Codemittel (134) zu speichern, das bei der Ausführung durch den Prozessor (114) angeordnet ist, um zu ermitteln, ob die Abfrage basierend mindestens teilweise auf einer oder mehrerer aus der Abfrage feststellbarer Eigenschaften der abfragenden Vorrichtung (104) zu ignorieren oder darauf zu reagieren ist, und angeordnet ist, um zu bewirken, dass das drahtlose Kommunikationsgerät (102) auf die Abfrage über die drahtlose Kommunikationsschnittstelle (112) reagiert, wenn die Menge eine aus der Abfrage feststellbare Identifizierung der abfragenden Vorrichtung (104) umfasst.

3. Drahtloses Kommunikationsgerät (102) nach Anspruch 2, wobei das drahtlose Kommunikationsgerät (102) ein Chipkartenleser (402) ist.

4. Drahtloses Kommunikationsgerät (102) nach Anspruch 2 oder Anspruch 3, wobei die drahtlose Kommunikationsschnittstelle (112) mit Bluetooth®-Kommunikationsprotokollen und/oder Ultraweitband-(UWB-) Kommunikationsprotokollen und/oder ZigBee^{™}-Kommunikationsprotokollen und/oder Hochfrequenzidentifikations- (RFID-) Kommunikationsprotokollen und/oder einem oder mehreren IEEE-802.11-Kommunikationsprotokollen kompatibel ist.

5. Kommunikationssystem (100), das Folgendes umfasst:
eine abfragende Vorrichtung (104), die über eine drahtlose Kommunikationsschnittstelle nach auffindbaren Geräten suchen kann, wobei die drahtlose Kommunikationsschnittstelle mit mindestens einem drahtlosen Kommunikationsprotokoll kompatibel ist; und
ein drahtloses Kommunikationsgerät (102) nach einem der Ansprüche 2 bis 4, wobei die drahtlose Kommunikationsschnittstelle (112) mindestens mit dem drahtlosen Kommunikationsprotokoll kompatibel ist.

6. Kommunikationssystem (100) nach Anspruch 5, wobei das drahtlose Kommunikationsprotokoll ein Bluetooth®-Kommunikationsprotokoll oder ein Ultraweitband-(UWB-)Kommunikationsprotokoll oder ein ZigBee^{™}-Kommunikationsprotokoll oder ein Hochfrequenzidentifikations-(RFID-) Kommunikationsprotokoll oder ein IEEE-802.11-Kommunikationsprotokoll ist.

7. Computerprogrammprodukt zum Steuern der Sichtbarkeit eines drahtlosen Geräts (102) in einem auffindbaren Modus, wobei das Computerprogrammprodukt ein computerlesbares Medium (116) umfasst, das von einem Prozessor (114) des drahtlosen Kommunikationsgeräts (102) ausführbare Programmcodemittel (134) verkörpert, um das Verfahren nach Anspruch 1 durchzuführen.

## Revendications

1. Procédé de contrôle de la visibilité d'un dispositif sans fil (102) en mode visible, le procédé comprenant les étapes suivantes :
réception d'une interrogation en provenance d'un dispositif interrogateur (104) recherchant des dispositifs visibles ;
décision d'ignorer ou de répondre à ladite interrogation en se basant, au moins en partie, sur une ou plusieurs propriétés dudit dispositif interrogateur (104) pouvant être déterminée(s) à partir de ladite interrogation ; **caractérisé en ce que** le procédé comprend en outre l'étape suivante :
réponse à ladite interrogation si un identifiant dudit dispositif interrogateur (104) peut être déterminé à partir de ladite interrogation et si ledit identifiant est compris dans un ensemble (140) d'identifiants d'un ou plusieurs dispositifs connectés précédemment audit dispositif sans fil (102).

2. Dispositif sans fil (102) comprenant :
une interface de communication sans fil (112) pouvant amener ledit dispositif sans fil (102) à passer en mode visible et par l'intermédiaire de laquelle ledit dispositif sans fil (102) peut recevoir une interrogation d'un dispositif interrogateur (104) recherchant des dispositifs visibles ;
un processeur (114) associé à ladite interface de communication sans fil (112) ; et
une mémoire (116) associée audit processeur (114), **caractérisé en ce que** ladite mémoire (116) peut stocker un ensemble (140) d'identifiants d'un ou plusieurs dispositifs connectés précédemment audit dispositif sans fil (102) et peut stocker des moyens de code pouvant être exécutés (134) qui, lorsqu'ils sont exécutés par ledit processeur (114), peuvent décider d'ignorer ou de répondre à ladite interrogation en se basant, au moins en partie, sur une ou plusieurs propriétés dudit dispositif interrogateur (104) pouvant être déterminée(s) à partir de ladite interrogation, et peuvent amener ledit dispositif sans fil (102) à répondre à ladite interrogation par l'intermédiaire de ladite interface de communication sans fil (112) si ledit ensemble comprend un identifiant dudit dispositif interrogateur (104) pouvant être déterminé à partir de ladite interrogation.

3. Dispositif sans fil (102) selon la revendication 2, dans lequel ledit dispositif sans fil (102) est un lecteur de carte à puces (402).

4. Dispositif sans fil (102) selon la revendication 2 ou la revendication 3, dans lequel ladite interface de communication sans fil (112) est compatible avec des protocoles de communication Bluetooth® et/ou des protocoles de communication ultra large bande (UWB) et/ou des protocoles de communication ZigBee^{™} et/ou des protocoles de communication d'identification par radiofréquence (RFID) et/ou un ou plusieurs protocoles de communication IEEE 802.11.

5. Système de communication (100) comprenant :
un dispositif interrogateur (104) pouvant rechercher des dispositifs visibles par l'intermédiaire d'une interface de communication sans fil, ladite interface de communication sans fil étant compatible avec au moins un protocole de communication sans fil ; et
un dispositif sans fil (102) selon l'une quelconque des revendications 2 à 4, dans lequel ladite interface de communication sans fil (112) est compatible avec au moins ledit protocole de communication sans fil.

6. Système de communication (100) selon la revendication 5, dans lequel ledit protocole de communication sans fil est un protocole de communication Bluetooth® ou un protocole de communication ultra large bande (UWB) ou un protocole de communication ZigBee^{™} ou un protocole de communication d'identification par radiofréquence (RFID) ou un protocole de communication IEEE 802.11.

7. Progiciel permettant de contrôler la visibilité d'un dispositif sans fil (102) en mode visible, le progiciel comprenant un support lisible par ordinateur (116) intégrant des moyens de code de programme (134) pouvant être exécutés par un processeur (114) dudit dispositif sans fil (102) afin de mettre en oeuvre le procédé selon la revendication 1.
